Europäisches Patentamt

European Patent Office

Office européen des brevets

(11) Veröffentlichungsnummer: **0 002 760**
A2

(12) **EUROPÄISCHE PATENTANMELDUNG**

(21) Anmeldenummer: 78101732.2

(22) Anmeldetag: 16.12.78

(51) Int. Cl.²: **C 08 F 8/06,** C 08 C 19/04, C 08 G 85/00

(30) Priorität: 29.12.77 DE 2758785

(43) Veröffentlichungstag der Anmeldung: 11.07.79 Patentblatt 79/14

(84) Benannte Vertragsstaaten: **DE FR GB IT**

(71) Anmelder: **Bayer Aktiengesellschaft, Zentralbereich Patente,Marken und Lizenzen Bayerwerk, D-5090 Leverkusen 1 (DE)**

(72) Erfinder: **Korber, Helmut, Dr., In der Hildscheid 18, D-5068 Odenthal (DE)**

(54) Verfahren und Vorrichtung zur Herstellung von Hydroperoxydgruppen enthaltenden Polymeren.

(57) Kontinuierliches Verfahren zur Herstellung von Hydroperoxidgruppen enthaltenden Polymeren aus oxidierbaren Polymeren, bei dem man die Schmelze des Polymeren unter einem Druck von 1–150 bar einer Temperatur von 80–300°C mit Sauerstoff oder sauerstoffhaltigen Gasen unter intensiver Durchmischung maximal 20 Min. in Kontakt bringt und nach der Oxidation das Hydroperoxidgruppen enthaltende Polymere durch Extrusion isoliert, und eine Vorrichtung zur Durchführung des Verfahrens.

- 1 -

BAYER AKTIENGESELLSCHAFT          5090 Leverkusen, Bayerwerk
Zentralbereich                    G/Rz
Patente, Marken und Lizenzen

Herstellung von Hydroperoxidgruppen enthaltenden Polymeren

Die Erfindung betrifft ein Verfahren zur schonenden Oxidation von Polymerisaten mit dem Ziel, Hydroperoxidgruppen einzuführen. Hydroperoxidgruppen enthaltende Polymerisate und ihre Herstellung sind bekannt. Beispielsweise beschreibt die DE-AS 1 011 622 ein Verfahren, in welchem ein Polymerisat, das oxidierbare Wasserstoffatome an sekundären oder tertiären Kohlenstoffatomen enthält, in Cumol als Lösungsmittel in Gegenwart von Cumolhydroperoxid als Katalysator durch Einleiten von Luft oder Sauerstoff oxidiert wird. Die Oxidation dauert 17 bis 100 Stunden und die Isolierung des Hydroperoxidgruppen enthaltenden Polymerisats aus dem Reaktionsgemisch ist sehr umständlich. Ein weiteres Verfahren zur Herstellung von Hydroperoxidgruppen enthaltenden Polymeren wird in der DE-AS 1 595 808 beschrieben. Danach werden pulverförmige Polymerisate, die Wasserstoffatome an tertiären Kohlenstoffatomen enthalten, in Wasser mit Hilfe eines kationischen oberflächenaktiven Mittels suspendiert und mit einem wasserlöslichen Persulfat als Katalysator durch Einleiten von Luft oder Sauerstoff oxidiert. Dieses Verfahren kommt mit kürzeren Oxidationszeiten aus, liefert aber nur Hydroperoxidgehalte von max. 400 ppm; die Isolierung des Hydroperoxidgruppen enthalten-

Le A 18 543 - Europa

- 2 -

den Polymerisats ist einfacher, aber es können nur pulverförmige Polymerisate diskontinuierlich eingesetzt werden.

Gegenstand der Erfindung ist ein kontinuierliches Verfahren zur Herstellung von Hydroperoxidgruppen enthaltenden Polymeren, das dadurch gekennzeichnet ist, daß man die Schmelze eines Polymerisats, das Wasserstoffatome an primären, sekundären oder tertiären Kohlenstoffatomen enthält, unter einem Druck von 1 - 150 bar bei einer Temperatur von 80 - 300°C mit Sauerstoff oder sauerstoffhaltigen Gasen unter intensiver Durchmischung ohne Zusatz eines Katalysators maximal 20 Min. in Kontakt bringt.

Ein weiterer Gegenstand der Erfindung ist eine Vorrichtung zur Durchführung dieses Verfahrens, die im wesentlichen eine Ein- oder Mehrwellenschneckenpresse darstellt, mit den folgenden Funktionszonen:

1. Einzugszone
2. Aufschmelzzone
3. Kompressionszone
4. Induktionszone mit Einlaß für Gase unter Druck
5. Oxidationszone mit Einlaß für Gase unter Druck
6. 2. Kompressionszone
7. Entgasungszone
8. Ausstoßzone

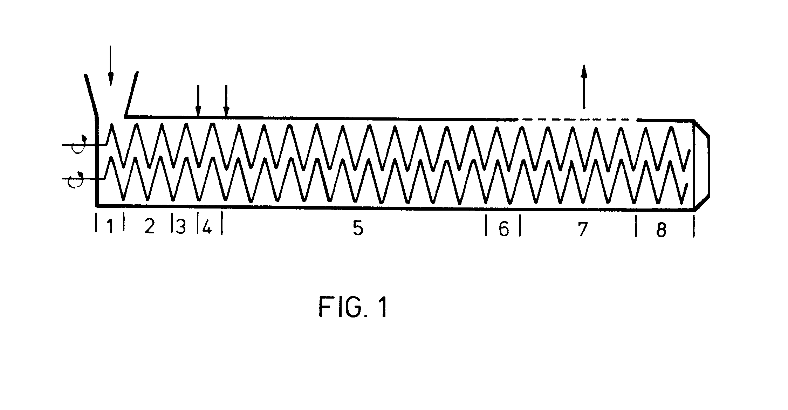

Die Vorrichtung ist in Figur 1 schematisch dargestellt.

Das erfindungsgemäße Verfahren beruht im wesentlichen auf der sehr raschen Einführung der Hydroperoxidgruppen in das Polymer unter schonenden Reaktionsbedingungen. Es ist lediglich erforderlich, das Polymer kurzzeitig verhältnismäßig hohen Drucken und Temperaturen bei inniger Durchmischung mit Sauerstoff oder sauerstoffhaltigen Gasen aus-

Le A 18 543

- 3 -

zusetzen. Ein Abbau des Materials unter Verkürzung der Ketten und Verringerung des Molekulargewichtes wird vermieden. Der Zusatz eines Katalysators ist nicht erforderlich, weil das erfindungsgemäße Verfahren mit thermischer Initiierung arbeitet.

Die Menge der auf diese Weise eingeführten Hydroperoxidgruppen entspricht etwa 1000 bis 10 000 ppm aktivem Sauerstoff. Die Hydroperoxidgruppen sind gleichmäßig über das Polymere verteilt. Unter schärferen Reaktionsbedingungen können bei leichtem Abbau der Polymerisate neben den Hydroperoxid- auch Carboxyl-, Ester- und Ketogruppen eingeführt werden. Die Menge der auf diese Weise eingeführten Gruppen beträgt 0 - 5 %, bevorzugt 0 - 1 % Carboxyl- und 0 - 10 %, vorzugsweise 0 - 2 % Estergruppen.

Die Vorteile des Verfahrens sind somit im wesentlichen kontinuierliche, schnelle und reproduzierbare Einführung der Hydroperoxidgruppen in ein Polymerisat ohne dessen Abbau. Die Polymerisate können in der handelsüblichen Granulatform eingesetzt werden. Es fallen weder emulgatorhaltige Abwässer noch Lösungsmittelgemische an.

Die durch das erfindungsgemäße Verfahren leicht zugänglichen Hydroperoxidgruppen enthaltenden Polymeren können verwendet werden z.B.

1. als reaktive Basispolymerisate in radikalischen Pfropfpolymerisationen. Dabei werden neuartige Pfropfpolymerisate erhalten;

2. als reaktive Komponente in Polymerisatmischungen;

3. als Form- oder Beschichtungsmassen mit selbstvernetzenden Eigenschaften.

Für das erfindungsgemäße Verfahren sind grundsätzlich alle oxidierbaren Polymeren geeignet. Besonders bevorzugt sind

Le A 18 543

- 4 -

Polymerisate und Copolymerisate von Monoolefin wie Polyethylen, Ethylen-vinylacetat-Copolymerisate, Polypropylen,
Polystyrol, Ethylen/Propylen-Kautschuke. Ebenfalls geeignet sind Dienpolymerisate wie Polybutadien, Polyisopren,
Styrol/Butadien-Copolymerisate, Polycarbonate, Polyester
wie Polyethylenterephthalat und Polybutylenterephthalat.
Ferner Polyether, Polyole, Polyurethane, Polyphenylenoxid
und Polyacetale wie Polyoximethylen.

Zur Oxidation kann Sauerstoff oder jedes sauerstoffhaltige
Gas benutzt werden, bevorzugt ist Luft.

Im allgemeinen kann man das Verfahren so durchführen, daß
man das Polymerisat in einer Schneckenpresse schmilzt und
komprimiert. Nach der Kompressionszone wird in die Induktionszone bei 190 - 300°C Sauerstoff oder sauerstoffhaltiges
Gas im Überschuß unter einem Druck von 1 - 150 bar eingedrückt. Hier wird die Oxidation gestartet und in der anschließenden Oxidationszone bei 100 - 300°C zu Ende geführt.
Auch hier wird Sauerstoff oder ein sauerstoffhaltiges Gas
im Überschuß unter 1 - 150 bar Druck in die Schneckenpresse
gedrückt. An die Oxidationszone schließt sich zur Druckhaltung eine Kompressionszone an und daran eine Entspannungszone, in der die Gase entweichen. Anschließend wird das
Reaktionsprodukt extrudiert und granuliert.

Le A 18 543

- 5 -

Beispiel 1

Hydroperoxidgruppen enthaltendes Hochdruckpolyäthylen wurde in einem gegensinnig rotierenden Doppelwellen-Laborextruder vom Typ Point Eight der Firma Welding Inc. mit 20 mm Wellendurchmasser und 48 D Länge hergestellt. Die Kompression der Schmelze wurde durch Vergrößerung des Kerndurchmessers der Wellen in den Kompressionszonen erreicht. Der Durchsatz betrug 2000 g pro Stunde bei 200 UpM der Wellen. Die mittlere Verweilzeit des Produktes im Extruder betrugt 3 Min. Die Wellen waren mit einer durchgehenden Steigung von 1 D ausgerüstet.

Es wurden 25 l Luft pro Stunde unter 75 bar Druck in die Induktionszone und 100 l Luft pro Stunde unter 55 bar in die Oxidationszone gedrückt.

Das extrudierte Polyäthylen enthielt 3200 ppm Hydroperoxid gruppen (bestimmt als aktiver Sauerstoff). Der Schmelzindex nach Bed. E bei 190° C betrug 7 g/10 Min.

Die Längen und Temperaturen der Zonen des Extruders sind in der Tabelle 1 angegeben.

Als Ausgangsmaterial wurde ein handelsübliches Hochdruckpolyäthylen (Baylon$^{(R)}$ 19 N 430, Bayer AG) verwendet.

Le A 18 543

- 6 -

| Tabelle 1 | | Beispiel 1 | | Beispiel 2 | |
|---|---|---|---|---|---|
| Zone | | Länge | Temp.$^{o}$C | Länge | Temp.$^{o}$C |
| Einzugs- | | 2 D | 110 | 2 D | 60 |
| Aufschmelz- | | 5 D | 180 | 4 D | 120 |
| Kompressions- | | 2 D | 180 | 1 D | 120 |
| Induktions- | | 3 D | 233 | 2 D | 210 |
| Oxidations- | | 22 D | 190 | 19 D | 180 |
| Kompressions- | | 2 D | 190 | 1 D | 180 |
| Entgasungs- | | 7 D | 150 | 6 D | 150 |
| Ausstoß- | | 5 D | 130 | 3 D | 130 |
| | | 48 D | | 38 D | |

Beispiel 2

Hydroperoxidgruppen enthatlendes Äthylen-Vinylacetat-Copolymerisat wurde in einem gleichsinnig rotierenden Doppelwellenextruder mit selbstreinigendem variablem Schneckenbesatz von 32 mm Durchmesser und 38 D Länge hergestellt. Die Kompression der Schmelze wurde durch Linksgewinde, Steigungssprünge und linksversetzte Knetblöcker im zweigängigen variablen Wellenbesatz erreicht. Der Durchsatz betrug 2500 g pro Stunde bei 25 UpM der Wellen. Es wurden 100 l Luft pro Stunde unter 30 bar in die Induktionszone und 300 l Luft pro Stunde unter 20 bar in die Oxidationszone gedrückt. Das extrudierte Produkt enthielt 2500 ppm aktive Peroxidgruppen (bestimmt als Sauerstoff). Mooney-Viskosität ML 4' = 13.

Die Längen und Temperaturen der Zonen des Extruders sind in Tabelle 1 angegebenen.

Als Ausgangsmaterial dient ein Äthylen/Vinylacetat-Copolymerisat mit 55 % Äthylen (Levapren 450; Bayer AG).

Le A 18 543

Patentansprüche:

1. Kontinuierliches Verfahren zur Herstellung von Hydroperoxid enthaltenden Polymeren aus oxidierbaren Polymeren, bei dem man die Schmelze des Polymeren unter einem Druck von 1 - 150 bar einer Temperatur von 80 - 300°C mit Sauerstoff oder sauerstoffhaltigen Gasen unter intensiver Durchmischung maximal 20 Min. in Kontakt bringt und nach der Oxidation das Hydroperoxidgruppen enthaltende Polymere durch Extrusion isoliert.

2. Vorrichtung zur Durchführung des Verfahrens nach Anspruch 1, bestehend im wesentlichen aus einer Ein- oder Mehrwellenschneckenpresse mit folgenden Funktionszonen:

1.) Einzugszone
2.) Aufschmelzzone
3.) Kompressionszone
4.) Induktionszone
5.) Oxidationszone
6.) Kompressionszone
7.) Entgasungszone
8.) Ausstoßzone

Le A 18 543

0002760

FIG. 1